# EUROPÄISCHE PATENTSCHRIFT

(11) **EP 2 239 546 B1**
(45) Veröffentlichungstag und Bekanntmachung des Hinweises auf die Patenterteilung: **25.07.2012**
(21) Anmeldenummer: 09161281.2
(22) Anmeldetag: 27.05.2009
(51) Int. Cl.: G01F 15/06, G01F 23/284, G01F 23/296

(54) **Sensorgehäuse mit Solarmodul für ein Feldgerät**
Sensor housing with solar module for a field device
Boîtier de capteur doté d'un module solaire pour un appareil de terrain

(30) Priorität: 09.04.2009 US 167974 P
(43) Veröffentlichungstag der Anmeldung: 13.10.2010
(73) Patentinhaber: VEGA Grieshaber KG, 77709 Wolfach (DE)
(72) Erfinder: Isenmann, Andreas, 77716, Haslach i.K. (DE); Allgaier, Volker, 77716, Haslach i.K. (DE); Fehrenbach, Josef, 77716, Haslach (DE); Deck, Thomas, 77709, Wolfach (DE); Kech, Günter, 77709, Wolfach (DE)
(74) Vertreter: Maiwald Patentanwalts GmbH

(56) Entgegenhaltungen:
- EP-A1- 0 884 567
- WO-A1-01/73382
- DE-A1-102006 032 250
- US-A1- 2005 245 291

## Beschreibung

### Gebiet der Erfindung

Die Erfindung betrifft die Messung von Füllständen, Grenzständen, Druck und Durchfluss. Insbesondere betrifft die Erfindung ein Sensorgehäuse für ein Feldgerät zur Füllstandmessung, Druckmessung, Grenzstandmessung oder Durchflussmessung, ein Feldgerät, ein Baukastensystem zur Herstellung verschiedener Feldgeräte sowie die Verwendung eines Sensorgehäuses in einem Feldgerät.

### Technologischer Hintergrund

Zur Messung eines Drucks, eines Füllstands oder eines Grenzstands in einem Behälter oder eines Durchflusses durch eine Leitung werden Feldgeräte verwendet. Diese Feldgeräte werden nach spezifischen Kundenwünschen konfektioniert. Dies erfordert oft relativ hohen Aufwand. Ändern sich die Anforderungen, die an das Feldgerät gestellt werden, ist oft der Kauf eines neuen Feldgeräts notwendig.

Für die Energieversorgung sind die Feldgeräte in der Regel an eine externe Energiequelle angeschlossen, beispielsweise über Zweileitertechnik.

DE 10 2006 032 250 A1 beschreibt Sensoren mit integrierter Solarenergieerzeugung. Es ist eine Energieversorgungseinheit für ein Feldgerät angegeben, welche ein Gehäuse und ein darin integriertes Solarmodul aufweist.

WO 01/73382 A1 beschreibt ein Feldgerät mit einer zusätzlichen Spannungsversorgungseinheit, die Solarzellen aufweist.

### Zusammenfassung der Erfindung

Es ist eine Aufgabe der Erfindung, die Herstellung und Konfektionierung von Feldgeräten zu erleichtern sowie die Flexibilität und Einsatzmöglichkeiten der Feldgeräte zu erhöhen.

Es sind ein Sensorgehäuse für ein Feldgerät zur Füllstandmessung, Druckmessung, Grenzstandmessung und Durchflussmessung, ein Feldgerät mit einem derartigen Sensorgehäuse, ein Baukastensystem zur Herstellung verschiedener Feldgeräte für die Füllstand-, die Grenzstand-, die Druck- oder die Durchflussmessung sowie die Verwendung eines solchen Sensorgehäuses in einem Feldgerät gemäß den Merkmalen der unabhängigen Ansprüche angegeben. Weiterbildungen der Erfindung ergeben sich aus den Unteransprüchen.

Es ist zu beachten, dass die im Folgenden beispielsweise im Hinblick auf das Sensorgehäuse beschriebenen Merkmale auch in dem Baukastensystem oder dem Feldgerät implementiert werden können, und umgekehrt.

Gemäß einem Ausführungsbeispiel der Erfindung ist ein Sensorgehäuse für ein Feldgerät zur Füllstandmessung, zur Druckmessung, zur Grenzstandmessung und/oder zur Durchflussmessung angegeben. Das Sensorgehäuse weist einen Gehäusekörper (oder auch einfach nur Gehäuse genannt) sowie ein Solarmodul auf. Das Solarmodul ist derart ausgeführt, dass es auf den Gehäusekörper aufgesetzt werden kann. Das Solarmodul ist weiterhin zum Versorgen des Feldgeräts mit elektrischer Energie ausgeführt.

Beispielsweise ist das Solarmodul lösbar mit dem Gehäusekörper verbunden, so dass es bedarfsweise am Gehäusekörper angebracht oder abgenommen werden kann. Beispielsweise ist das Sensorgehäuse multifunktional ausgeführt. Dies bedeutet, dass das Sensorgehäuse, falls gewünscht, auch (alternativ oder zusätzlich zur Versorgung durch das Solarmodul) an eine externe Energieversorgung angeschlossen werden kann, beispielsweise an eine Zweileiterschleife (4...20mA).

Gemäß einem weiteren Ausführungsbeispiel der Erfindung weist das Sensorgehäuse ein Energiespeichermodul zur Speicherung der vom Solarmodul gesammelten elektrischen Energie auf. Der Gehäusekörper weist eine erste Kammer und eine zweite Kammer auf, wobei der Energiespeicher in der ersten Kammer angeordnet ist.

Das Solarmodul wird beispielsweise auf die erste Kammer aufgesetzt, so dass eine elektrische Verbindung mit dem Energiespeicher hergestellt ist. Die erste Kammer wird hierbei von dem Solarmodul verschlossen, beispielsweise sogar wasserdicht.

Gemäß einem weiteren Ausführungsbeispiel der Erfindung weist das Sensorgehäuse ein Messwert-Übertragungsmodul zur Übertragung von Messwerten an eine externe Einheit, beispielsweise eine Steuereinheit, auf, wobei das Messwert-Übertragungsmodul in der zweiten Kammer angeordnet ist.

Die zweite Kammer kann ebenfalls mit einem entsprechenden Gehäusedeckel verschlossen werden.

Die Kammern sind also durch jeweils einen Deckel verschließbar und/oder durch eine Trennwand voneinander getrennt. Das Übertragungsmodul kann an die Form der ersten Kammer angepasst sein. Beispielsweise ist das Übertragungsmodul geometrisch so aufgebaut, dass es in die zweite Kammer eingepasst ist. Genauso kann auch das Energiespeichermodul, bei dem es sich beispielsweise um einen Akkumulator oder eine Kondensatorschaltung handelt, an die Form der ersten Kammer angepasst sein, so dass keine zusätzliche Befestigung von Energiespeichermodul und Messwert-Übertragungsmodul in den Kammern notwendig ist.

Gemäß einem weiteren Ausführungsbeispiel der Erfindung weist das Solarmodul eine erste Gruppe von elektrischen Schleifkontakten auf, wobei der Gehäusekörper eine der ersten Gruppe entsprechende zweite Gruppe von elektrischen Schleifkontakten aufweist. Die elektrischen Schleifkontakte der ersten Gruppe und der zweiten Gruppe sind derart aufeinander abgestimmt, dass sie ein Aufsetzen des Solarmoduls auf dem Gehäusekörper und einen damit verbundenen elektrischen Anschluss des Solarmoduls an den Energiespeicher unter verschiedenen Drehwinkeln ermöglichen.

In anderen Worten kann das Solarmodul unter verschiedenen Winkeln auf das Gehäuse aufgesetzt werden und von dieser Aufsetzposition in eine Verriegelungsposition gebracht werden, in der ein elektrischer Kontakt zwischen dem Energiespeicher und dem Solarmodul hergestellt ist.

Gemäß einem weiteren Ausführungsbeispiel der Erfindung ist das Solarmodul auf den Gehäusekörper aufgeschraubt. Auch kann ein Bajonettverschluss vorgesehen sein, um das Solarmodul an dem Gehäusekörper zu befestigen.

Gemäß einem weiteren Ausführungsbeispiel der Erfindung weist das Sensorgehäuse eine Lade-Schutzelektronik für den Energiespeicher auf, die in dem Energiespeichermodul untergebracht ist.

Gemäß einem weiteren Ausführungsbeispiel der Erfindung weist das Sensorgehäuse eine Montageverbindung auf, die der Anbringung des Sensorgehäuses an einer Montageplatte dient. Die Montageplatte kann beispielsweise Teil eines Tanks sein oder mit dem Tank verbunden sein.

Gemäß einem weiteren Ausführungsbeispiel der Erfindung ist die Montageverbindung zur Anbringung des Sensorgehäuses an einem Kugelgelenkkopf ausgeführt, wodurch ein Verkippen oder Rotieren des Sensorgehäuses ermöglicht wird.

Auf diese Weise ist es möglich, dass das Solarmodul stets optimal in Bezug auf den aktuellen Sonnenstand eingestellt werden kann, da das Kugelgelenk eine Rotation des Sensorgehäuses in alle Raumrichtungen zulässt.

Erfindungsgemäß weist das Sensorgehäuse eine automatische Nachführungseinheit zum Verkippen des Sensorgehäuses auf, so dass eine Oberflächennormale des Solarmoduls in Richtung Sonne zeigt, wenn das Sensorgehäuse an einem Tank installiert ist.

Gemäß einem weiteren Ausführungsbeispiel der Erfindung weist das Sensorgehäuse einen GPS-Empfänger zur Übermittlung von Informationen bezüglich einem aktuellen Sonnenstand am Ort des Sensorgehäuses an die automatische Nachführungseinheit auf.

Gemäß einem weiteren Ausführungsbeispiel der Erfindung weist das Sensorgehäuse ein oder mehrere Helligkeitssensoren zum Ermitteln einer Richtung, aus der Sonnenlicht auf das Solarmodul einfällt, und zur Übermittlung von Informationen bezüglich dieser Richtung an die automatische Nachführungseinheit auf.

Gemäß einem weiteren Ausführungsbeispiel der Erfindung ist ein Feldgerät zur Füllstandmessung, zur Grenzstandmessung, zur Druckmessung und/oder zur Durchflussmessung angegeben, welches ein oben und im Folgenden beschriebenes Sensorgehäuse aufweist.

Gemäß einem weiteren Ausführungsbeispiel der Erfindung ist ein Baukastensystem zur Herstellung verschiedener Feldgeräte für die Füllstandmessung, die Grenzstandmessung, die Druckmessung und/oder die Durchflussmessung angegeben, welches ein oben und im Folgenden beschriebenes Sensorgehäuse mit Solarmodul aufweist.

Gemäß einem weiteren Ausführungsbeispiel der Erfindung weist das Baukastensystem weiterhin eine Sensorelektronik und ein Bedienmodul auf. Das Energiespeichermodul ist hierbei durch die Sensorelektronik austauschbar. Ebenso ist das Solarmodul durch das Bedienmodul austauschbar. Beispielsweise können also sowohl das Solarmodul als auch das Bedienmodul auf das Sensorgehäuse aufgeschraubt werden. Beispielsweise können wahlweise das Energiespeichermodul oder die Sensorelektronik in die erste Kammer eingeführt werden.

Gemäß einem weiteren Ausführungsbeispiel der Erfindung ist die Verwendung eines oben und im Folgenden beschriebenen Sensorgehäuses in einem Feldgerät zur Füllstand-, Grenzstand-, Druck- und/oder Durchflussmessung angegeben.

Im Folgenden werden mit Verweis auf die Figuren Ausführungsbeispiele der Erfindung beschrieben.

### Kurze Beschreibung der Figuren

Fig. 1 zeigt ein Sensorgehäuse mit einem Solarmodul gemäß einem Ausführungsbeispiel der Erfindung.
Fig. 2A zeigt eine perspektivische Darstellung eines Solarmoduls gemäß einem Ausführungsbeispiel der Erfindung.
Fig. 2B zeigt eine perspektivische Darstellung eines Solarmoduls gemäß einem Ausführungsbeispiel der Erfindung.
Fig. 2C zeigt eine Unterseite eines Solarmoduls gemäß einem Ausführungsbeispiel der Erfindung.
Fig. 3 zeigt eine perspektivische Darstellung eines Gehäusekörpers gemäß einem Ausführungsbeispiel der Erfindung.
Fig. 4 zeigt eine Querschnittsansicht eines Sensorgehäuses gemäß einem Ausführungsbeispiel der Erfindung.
Fig. 5 zeigt eine Querschnittsansicht eines Sensorgehäuses gemäß einem weiteren Ausführungsbeispiel der Erfindung.
Fig. 6 zeigt eine Querschnittsansicht eines Sensorgehäuses sowie eines Füllstandsensors gemäß einem weiteren Ausführungsbeispiel der Erfindung.
Fig. 7 zeigt eine Querschnittsansicht eines Sensorgehäuses und eines Feldgeräts gemäß einem weiteren Ausführungsbeispiel der Erfindung.
Fig. 8 zeigt eine Querschnittsdarstellung eines Sensorgehäuses und eines Feldgeräts gemäß einem weiteren Ausführungsbeispiel der Erfindung.
Fig. 9 zeigt eine Querschnittsansicht eines Sensorgehäuses und eines Feldgeräts gemäß einem weiteren Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

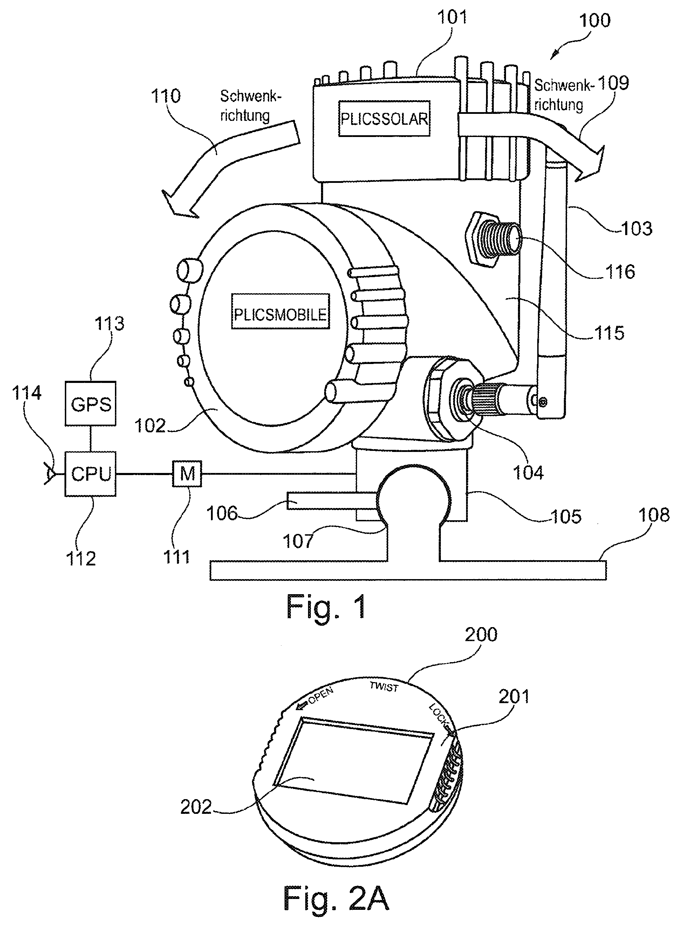

Fig. 1 zeigt ein Sensorgehäuse 100 gemäß einem Ausführungsbeispiel der Erfindung. Das Sensorgehäuse weist eine erste und eine zweite Kammer auf, die jeweils durch eine Abdeckung 101, 102 erschlossen werden können.

In der Abdeckung 101 befindet sich ein Solarmodul, welches zusammen mit der Abdeckung 101 auf das Gehäuse und damit auf die erste Kammer aufgesetzt werden kann. Die zweite Abdeckung 102 kann auf die zweite Kammer aufgeschraubt werden, in der sich beispielsweise ein Messwert-Übertragungsmodul zum Übertragen von Messwerten und zum Empfang von Parametrierungsdaten befindet.

Das Sensorgehäuse 100 weist eine Montageverbindung 105 mit einer Aufnahme für ein Kugelgelenk 107 auf. Das Kugelgelenk 107 ist an eine Montageplatte 108 angebracht, die beispielsweise an einem Tank befestigt werden kann oder einen Teil des Tanks bildet.

Weiterhin ist ein Feststellmechanismus 106 vorgesehen sowie ein Festsetzen der Montageverbindung am Kugelgelenk 107.

Weiterhin ist ein Motor bzw. Antrieb 111 vorgesehen, der über eine Steuereinrichtung (beispielsweise eine CPU) 112 gesteuert wird und das Sensorgehäuse um das Kugelgelenk verschwenken kann. Auf diese Weise wird eine automatische Nachführungseinheit bereitgestellt, welche es ermöglicht, dass das Sensorgehäuse stets optimal zur Sonne steht. Hierfür kann auch ein optischer Detektor 114 vorgesehen sein, der mit der Steuerung 112 verbunden ist und den Sonnenstand misst. Der Detektor 114 kann beispielsweise auch am Solarmodul angebracht sein. Auch (alternativ oder zusätzlich) kann ein Satellitennavigationsempfänger 113 vorgesehen sein, der mit Hilfe seiner internen Uhr und ggf. empfangenen Positionsdaten den aktuellen Sonnenstand im Einbauort ermitteln kann, so dass die Nachführung automatisch gesteuert wird.

Die Pfeile 109, 110 zeigen, dass das Sensorgehäuse 100 in verschiedene Richtungen verschwenkt werden kann.

An dem Gehäusekörper 115 befindet sich eine Antennenschnittstelle 104, an die eine Antenne 103 angebracht werden kann. Weiterhin ist eine Schnittstelle 116 vorgesehen, an die ein Sensor (beispielsweise ein Füllstandradarsensor oder ein Ultraschallsensor, ein Grenzstandsensor, ein Druckmesssensor oder ein Durchflusssensor) angeschlossen werden kann.

Fig. 2A zeigt ein Solarmodul 200, das in der Abdeckung 101 (siehe Fig. 1) integriert ist. Das Solarmodul 200 weist ein Gehäuse 201 sowie eine oder mehrere Solarzellen 202 auf. Zusätzlich können Status-LED's und ein oder mehrere Bedientasten vorgesehen sein.

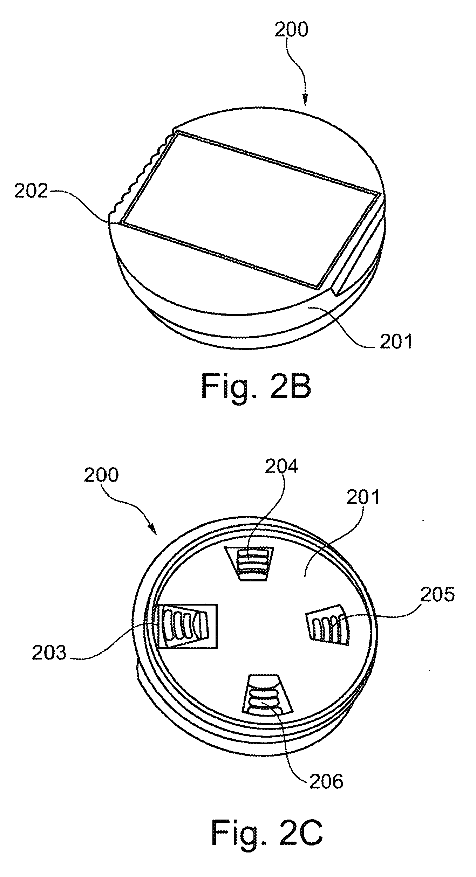

Fig. 2B zeigt eine weitere Ausführung eines solchen Solarmoduls 200.

Fig. 2C zeigt die Rückseite des Solarmoduls 200. Es ist eine Gruppe aus 4 x 4 Schleifkontakten 203, 204, 205, 206 zu erkennen. Mit Hilfe dieser Schleifkontakte ist es möglich, dass das Solarmodul in mindestens vier verschiedenen Positionen (0 Grad, 90 Grad, 180 Grad, 270 Grad) am Gehäusekörper befestigt und an den Energiespeicher elektrisch angeschlossen wird. Eine feinere Auflösung der Schleifkontakte als 90 Grad pro Kontakt ist ebenso möglich, um eine noch genauere Ausrichtung zur Sonne zu erzielen.

Hierfür weist der Gehäusekörper vier entsprechende, federbelastete Kontaktstifte auf, die in einer Reihe angeordnet sind, entsprechend der Anzeige- und Bedieneinheit PLICSCOM der Fa. VEGA. In anderen Worten erfolgt die Verbindung zwischen dem Solarmodul und dem Energiespeichermodul (beispielsweise in Form eines Akkupacks) wie bei PLICSCOM.

Zwei der vier Kontakte werden verwendet um die Energie vom Solarmodul auf den Energiespeicher (z.B. der Akku in der ersten Kammer) zu übertragen. Die weiteren beiden Kontakte können verwendet werden um Informationen über den Akkuzustand am Solarmodul z.B. bei Tastendruck ( an einer Statusanzeige (z.B. Balken-LED) darzustellen. Dadurch ist eine Kommunikation zwischen Akku-Elektronik (Schutzbeschaltung mit Ladeintelligenz) und Solarmodul möglich.

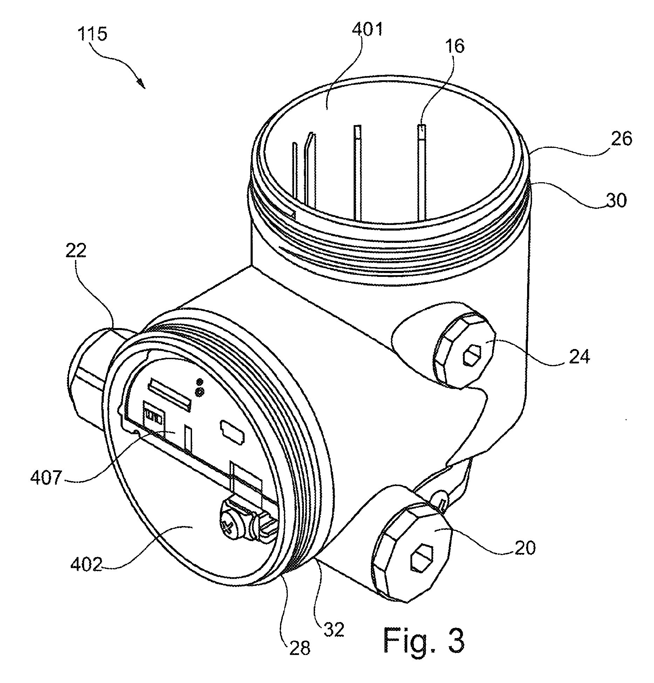

Fig. 3 zeigt eine dreidimensionale Ansicht eines Gehäusekörpers 115 mit einer ersten Kammer 401 und einer zweiten Kammer 402. Die beiden Kammern 401 und 402 sind in ihrem vorderen Bereich zylinderförmig geformt, wobei die Zylinderachsen der beiden Kammern senkrecht aufeinander stehen. Dadurch ergibt sich eine im Wesentlichen L-förmige Gestalt des Gehäusekörpers 115.

Wie weiter in der Fig. 3 zu erkennen ist, können die Außenwände der Kammern 401 und 402, die gleichzeitig Abschnitte der Außenwand des Gehäusekörpers 115 bilden, mit Rippen 16 verstärkt sein. In der Kammer 401 ist ein Messwert-Übertragungsmodul 407 angeordnet. Weiter weist der Gehäusekörper 115 einen Antennenanschluss 20, einen Versorgungsanschluss 22 und einen Steuerungsanschluss 24 oder Sensorversorgungsanschluss 24 auf.

Der Sensorversorgungsanschluss 24 des Gehäusekörpers 115 ist geeignet zum Anschluss an eine 4-20 mA Zweileiterschleife mit oder ohne HART-Bus, eines Profibusses PA oder eines Foundation Fieldbus (FF).

Der Versorgungsanschluss 22 kann mit einer Spannungsversorgung zwischen 4,8 V bis 40 V DC verbunden werden.

Der Gehäusekörper 115 weist ein Gewinde 26 für die zweite Kammer 402 und ein Gewinde 28 für die erste Kammer 401 auf, mit deren Hilfe die beiden Kammern 401, 402 mit jeweils einem Deckel verschlossen werden können, wobei der eine Deckel das Solarmodul enthalten kann. Am Ende des Gewindes 26, 28 befindet sich ein Dichtring 30 bzw. 32, der ein wasserdichtes Verschließen der Kammer 14, 16 ermöglicht. Die Gewinde 26, 28 sind bauartgleich, so dass bauartgleiche Deckel zum Verschließen der beiden Kammern 401, 402 verwendet werden können.

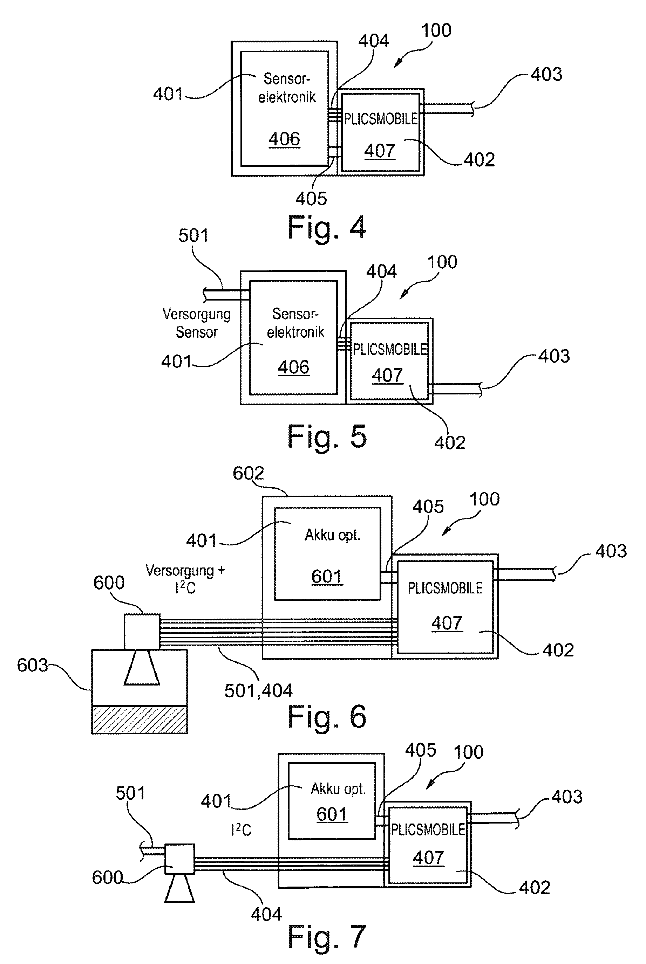

Die Figuren 4 bis 9 zeigen Querschnittdarstellungen eines Sensorgehäuses in verschiedenen Konfigurationen. Es ist zu beachten, dass sämtliche in den Figuren 4 bis 9 gezeigten Konfigurationen auch von einem multifunktionalen Sensorgehäuse bereitgestellt werden können, in dem die entsprechenden Schnittstellen vorgesehen sind. Es ist zu beachten, dass die Ausführungsformen der Figs. 4, 5, 8 und 9 in Kombination mit dem Solarmodul eine entsprechende Dimensionierung bzw. Leistungsfähigkeit des Solarmoduls erfordern. Allerdings kann eine effektive Energiesparschaltung, wie sie beispielsweise in dieser Beschreibung offenbart wird, auch die Verwendung verhältnismäßig kleiner Solarmodule ermöglichen.

Fig. 4 zeigt ein Sensorgehäuse 100 (also einen Gehäusekörper 115 mit entsprechenden Einbauten und Aufsätzen (z.B. Deckel 101, 102) sowie Anschlüssen (z.B. Schnittstelle 116)), welches eine erste Kammer 401 und eine zweite Kammer 402 aufweist. In der ersten Kammer 401 befindet sich die Sensorelektronik 406 und in der zweiten Kammer 402 befindet sich ein Messwert-Übertragungsmodul 407 zur kabellosen und/oder kabelgebundenen Übertragung von Messwerten. Für die drahtlose Messwertübertragung ist eine Antenne vorgesehen (siehe beispielsweise Fig. 1). Für die drahtgebundene Datenübertragung und Energieversorgung ist eine Zweileiterschleifer 403 vorgesehen, an der das Messwert-Übertragungsmodul 407 angeschlossen ist.

Das Messwert-Übertragungsmodul 407 ist über zwei Leiter 405 mit der Sensorelektronik 406 in der ersten Kammer verbunden. Über diese beiden Leiter 405 erfolgt die Energieversorgung der Sensorelektronik. Über die Leitungen 404 werden Daten zwischen der Sensorelektronik 406 und dem Messwert-Übertragungsmodul 407 ausgetauscht.

Bei der Kommunikationsleitung 404 handelt es sich beispielsweise um eine I²C-Verbindung.

Fig. 5 zeigt ein Sensorgehäuse 100 mit Sensorelektronik 406 und Messwert-Übertragungsmodul 407 in den beiden Kammern. Einerseits ist das Übertragungsmodul 402 über die Zweileiterschleife 403 an eine externe Stromversorgung angeschlossen. Andererseits ist auch die Sensorelektronik 406 über die beiden Leiter 501 an eine externe Stromversorgung angeschlossen.

Im Gegensatz zu Fig. 4 erfolgt die Versorgung des Sensors über die Zweileiterschleife 501 (z. B. HART, Profibus PA oder Foundation Fieldbus). Somit ist es möglich, dass der Messwert des Sensors von einer Steuerung zu Steuer- bzw. Regelzwecken verwendet wird und parallel dazu kann der Messwert über das Übertragungsmodul 407 versendet werden.

Im Ausführungsbeispiel der Fig. 6 befindet sich in der ersten Kammer 401 ein Energiespeichermodul 601, beispielsweise in Form eines Akkumulators. Auf der Oberseite 602 der ersten Kammer 401 ist das Solarmodul aufgesetzt (nicht zu sehen in Fig. 6).

In dieser Ausführungsform ist der Sensor 600 (Drucksensor, Füllstandsensor, etc.) vom Sensorgehäuse abgesetzt angeordnet (und nicht in der ersten Kammer 401). Der Sensor 600 ist in einen Tank 603 eingebaut, in dem sich ein Füllgut befindet. Über eine entsprechende Datenleitung 404 (beispielsweise I²C) und eine Versorgungsleitung 501 ist der Sensor 600 an das Messwert-Übertragungsmodul 402 angeschlossen. Der Einbauort von Sensor 600 und dem Gehäuse 100 mit dem Messwert-Übertragungsmodul 402 unterscheiden sich. Dies ist beispielsweise dann nötig, wenn der Sensor 600 an einer Stelle eingebaut werden muss, die sich für die GSM-Kommunikation des Übertragungsmoduls 402 nicht oder nur unzureichend eignet. Auch kann diese Variante verwendet werden, wenn die Energie vom System aus einem Akku mit einem daran angeschlossenen Solarmodul bezogen werden soll.

Fig. 7 zeigt ein weiteres Ausführungsbeispiel, bei dem der Sensor 600 über die beiden Leiter 501 an eine eigene Energieversorgung angeschlossen ist. In anderen Worten erfolgt die Versorgung des Sensors 600 über eine Schleife (z. B. HART, Profibus PA oder Foundation Fieldbus).

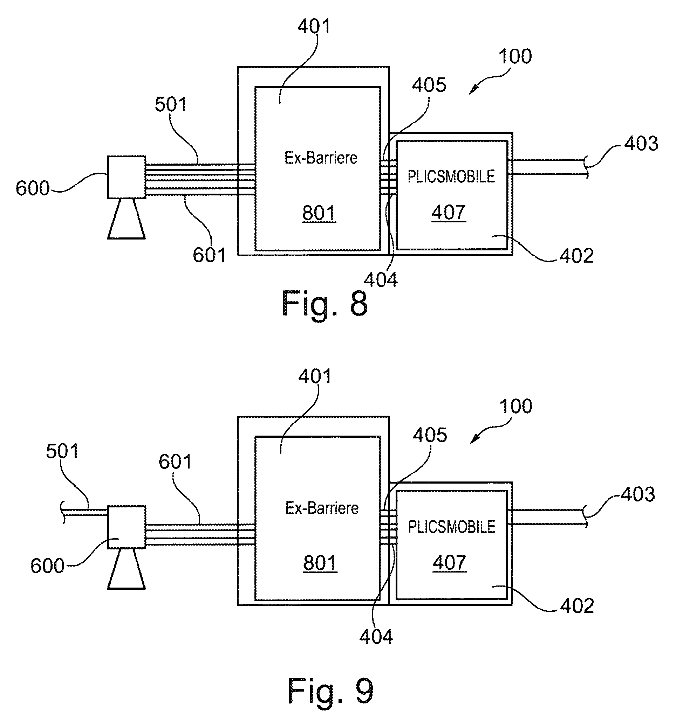

In den Ausführungsbeispielen der Fig. 8 und 9 ist in die erste Kammer eine Ex-Barriere 801 integriert. Die Ex-Barriere sorgt für die erforderliche Begrenzung von Spannung und Strom, so dass die Sensorversorgung durch das Messwert-Übertragungsmodul 402 eigensicher erfolgt (Fig. 8).

Das Sensorgehäuse 100 befindet sich in dieser Anwendung immer außerhalb vom Ex-Bereich. Diese Variante kann für Anwendungen eingesetzt werden, in denen sich der Sensor in einer Ex-Zone befindet und die Messwerte von diesem Sensor über das Messwert-Übertragungsmodul 402 versendet werden sollen.

Im Ausführungsbeispiel der Fig. 9 erfolgt die Sensorversorgung durch die Schleife 501. Somit kann diese Variante auch nachträglich in eine bestehende Anlage eingebaut werden.

In dem Energiespeichermodul 601 kann eine Lade- und Schutzelektronik untergebracht sein. Im Solarmodul 200 kann lediglich ein Verpolschutz untergebracht sein.

Das Solarmodul kann gemäß einem Aspekt der Erfindung ausgerichtet werden (Richtung Süden oder Richtung Sonne). Dies kann über einen Kugelkopf am Fuß des Gehäuses erfolgen. Die Ausrichtung kann auch automatisch erfolgen. Dazu kann beispielsweise ein GPS-Empfänger mit Uhr vorgesehen sein. Eine Ausrichtung über Helligkeitssensoren ist auch möglich. Der Vorteil der automatischen Ausrichtung besteht darin, dass der Energiegewinn höher ist und bei einer Neigung gegenüber der Horizontalen (Erde) das System weniger schmutzanfällig ist.

Ist eine automatische Nachführung vorgesehen, kann der Feststellmechanismus 106 (siehe Fig. 1) entfallen. Die Mechanik zur Verstellung befindet sich in der Aufnahme (Montageverbindung 105). Das Gerät kann in alle Richtungen geschwenkt werden (bis zum maximalen Kippwinkel).

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Sensorgehäuse (100) für ein Feldgerät zur Füllstandmessung, Druckmessung, Grenzstandmessung oder Durchflussmessung, das Sensorgehäuse (100) aufweisend:
einen Gehäusekörper (115);
ein Solarmodul (200) zum Aufsetzen auf den Gehäusekörper (115);
wobei das Solarmodul (200) zum Versorgen des Feldgeräts (600) mit elektrischer Energie ausgeführt ist;
das Sensorgehäuse **dadurch gekennzeichnet dass** eine automatische Nachführungseinheit (111, 112, 113) zum Verkippen des Sensorgehäuses aufweist, so dass eine Oberflächennormale des Solarmoduls in Richtung Sonne zeigt, wenn das Sensorgehäuse an einem Tank installiert ist.

2. Sensorgehäuse nach Anspruch 1, weiterhin aufweisend:
ein Energiespeichermodul (601) zur Speicherung der elektrischen Energie vom Solarmodul (200);
wobei der Gehäusekörper (115) eine erste Kammer (401) und eine zweite Kammer (402) aufweist;
wobei der Energiespeicher in der ersten Kammer (401) angeordnet ist.

3. Sensorgehäuse nach Anspruch 2, weiterhin aufweisend:
ein Messwert-Übertragungsmodul (407) zur Übertragung von Messwerten an eine externe Einheit;
wobei das Messwert-Übertragungsmodul (407) in der zweiten Kammer (402) angeordnet ist.

4. Sensorgehäuse nach Anspruch 2 oder 3,
wobei das Solarmodul (200) eine erste Gruppe von elektrischen Schleifkontakten (203, 204, 205, 206)) aufweist;
wobei der Gehäusekörper (115) eine der ersten Gruppe entsprechende zweite Gruppe von elektrischen Schleifkontakten aufweist;
wobei die elektrischen Schleifkontakte der ersten Gruppe und der zweiten Gruppe derart aufeinander abgestimmt sind, dass sie ein Aufsetzen des Solarmoduls auf den Gehäusekörper und einen damit verbundenen elektrischen Anschluss des Solarmoduls an den Energiespeicher unter verschiedenen Drehwinkeln ermöglichen.

5. Sensorgehäuse nach einem der vorhergehenden Ansprüche,
wobei das Solarmodul (200) auf den Gehäusekörper (115) aufgeschraubt ist.

6. Sensorgehäuse nach einem der Ansprüche 2 bis 5, weiterhin aufweisend:
eine Lade- und Schutzelektronik für das Energiespeichermodul, die in dem Energiespeichermodul untergebracht ist.

7. Sensorgehäuse nach einem der vorhergehenden Ansprüche, weiterhin aufweisend:
eine Montageverbindung (105);
wobei die Montageverbindung (105) zur Anbringung des Sensorgehäuses an einer Montageplatte ausgeführt ist.

8. Sensorgehäuse nach Anspruch 7,
wobei die Montageverbindung (105) zur Anbringung des Sensorgehäuses an einem Kugelkopf (107) aufgerührt ist.

9. Sensorgehäuse nach Anspruch 1, weiterhin aufweisend:
einen GPS-Empfänger (113) zur Übermittlung von Informationen bezüglich einem aktuellen Sonnenstand am Ort des Sensorgehäuses an die automatische Nachführungseinheit.

10. Sensorgehäuse nach Anspruch 1 oder 9, weiterhin aufweisend:
einen Helligkeitssensor (114) zum Ermitteln einer Richtung, aus der Sonnenlicht auf das Solarmodul einfällt, und zur Übermittlung von Informationen bezüglich dieser Richtung an die automatische Nachführungseinheit.

11. Feldgerät zur Füllstands-, Grenzstands-, Druck- oder Durchflussmessung, aufweisend:
ein Sensorgehäuse nach einem der Ansprüche 1 bis 10.

12. Baukastensystem zur Herstellung verschiedener Feldgeräte für die Füllstand-, die Grenzstand-, die Druck- oder die Durchflussmessung, das Baukastensystem aufweisend:
ein Sensorgehäuse mit einem Solarmodul nach einem der Ansprüche 1 bis 10.

13. Baukastensystem nach Anspruch 12, weiterhin aufweisend:
eine Sensorelektronik;
ein Bedienmodul;
wobei das Energiespeichermodul durch die Sensorelektronik austauschbar ist; und
wobei das Solarmodul durch das Bedienmodul austauschbar ist.

14. Verwendung eines Sensorgehäuses nach einem der Ansprüche 1 bis 10 in einem Feldgerät zur Füllstand-, Grenzstand-, Druck- oder Durchflussmessung.

## Claims

1. A sensor housing (100) for a field device for fill-level measuring, pressure measuring, limit-level measuring or flow measuring, with the sensor housing (100) comprising:
a housing body (115);
a solar module (200) for placement onto the housing body (115);
wherein the solar module (200) is designed for supplying the field device (600) with electrical energy;
**characterized in that** the sensor housing comprises an automatic tracking unit (111, 112, 113) for tilting the sensor housing so that a surface normal of the solar module points in the direction of the sun when the sensor housing is installed on a tank.

2. The sensor housing according to 1, further comprising:
an energy storage module (601) for storing the electrical energy of the solar module (200);
wherein the housing body (115) comprises a first chamber (401) and a second chamber (402);
wherein the energy storage device is arranged in the first chamber (401).

3. The sensor housing according to 2, further comprising:
a measured-value transmission module (407) for transmitting measured values to an external unit;
wherein the measured-value transmission module (407) is arranged in the second chamber (402).

4. The sensor housing according to claim 2 or 3,
wherein the solar module (200) comprises a first group of electrical slide contacts (203, 204, 205, 206);
wherein the housing body (115) comprises a second group of electrical slide contacts, which second group corresponds to the first group;
wherein the electrical slide contacts of the first group and of the second group are aligned with each other in such a manner that they make it possible to place the solar module on the housing body and to establish an associated electrical connection of the solar module to the energy storage device at various rotation angles.

5. The sensor housing according to any one of the preceding claims,
wherein the solar module (200) is screwed on the housing body (115).

6. The sensor housing according to any one of claims 2 to 5, further comprising:
charging and protective electronics for the energy storage module, which electronics are accommodated in the energy storage module.

7. The sensor housing according to any one of the preceding claims, further comprising:
a mounting connection (105);
wherein the mounting connection (105) is designed for attaching the sensor housing to a mounting plate.

8. The sensor housing according to claim 7,
wherein the mounting connection (105) for attaching the sensor housing is established on a spherical head (107).

9. The sensor housing according to claim 1, further comprising:
a GPS receiver (113) for transmitting information relating to the then current solar position at the location of the sensor housing to the automatic tracking unit.

10. The sensor housing according to claim 1 or 9, further comprising:
a brightness sensor (114) for determining the direction from which sunlight impinges on the solar module, and for transmitting information relating to this direction to the automatic tracking unit.

11. A field device for fill-level measuring, limit-level measuring, pressure measuring or flow measuring, comprising:
a sensor housing according to any one of claims 1 to 10.

12. A modular system for producing various field devices for fill-level measuring, limit-level measuring, pressure measuring, or flow measuring, with the modular system comprising:
a sensor housing with a solar module according to any one of claims 1 to 10.

13. The modular system according to claim 12, further comprising:
sensor electronics;
an adjustment module;
wherein the energy storage module is exchangeable with the sensor electronics; and
wherein the solar module is exchangeable with the adjustment module.

14. The use of a sensor housing according to any one of claims 1 to 10 in a field device for fill-level measuring, limit-level measuring, pressure measuring, or flow measuring.

## Revendications

1. Boîtier de capteur (100) pour un appareil de champ destiné à la mesure de niveau, mesure de pression, mesure d'état limite ou mesure de débit, le boîtier de capteur (100) comprenant :
un corps de boîtier (115) ;
un module solaire (200) pour la mise en place sur le corps de boîtier (115) ;
le module solaire (200) étant réalisé pour l'alimentation de l'appareil de champ (600) en énergie électrique ;
**caractérisé en ce que**
le boîtier de capteur présente une unité d'asservissement automatique (111, 112, 113) pour le basculement du boîtier de capteur, de sorte qu'une normale à la surface du module solaire est orientée en direction du soleil, lorsque le boîtier de capteur est installé sur un réservoir.

2. Boîtier de capteur selon la revendication 1, comprenant en outre :
un module de stockage d'énergie (601) pour accumuler l'énergie électrique du module solaire (200) ;
le corps de boîtier (115) présentant un premier compartiment (401) et un second compartiment (402) ;
l'accumulateur d'énergie étant disposé dans le premier compartiment (401).

3. Boîtier de capteur selon la revendication 2, comprenant en outre :
un module de transmission de valeurs de mesure (407) pour la transmission de valeurs de mesure à une unité externe ;
le module de transmission de valeurs de mesure (407) étant disposé dans le second compartiment (402).

4. Boîtier de capteur selon l'une des revendications 2 et 3, le module solaire (200) présentant un premier groupe de contacts glissants électriques (203, 204, 205, 206) ;
le corps de boîtier (115) présentant un second groupe de contacts glissants électriques, qui correspond au premier groupe ;
les contacts glissants électriques du premier groupe et du second groupe étant adaptés les uns aux autres de telle sorte qu'ils permettent une mise en place du module solaire sur le corps de boîtier et une connexion électrique, ainsi établie, du module solaire à l'accumulateur d'énergie sous des angles de rotation différents.

5. Boîtier de capteur selon l'une des revendications précédentes, le module solaire (200) étant vissé sur le corps de boîtier (115).

6. Boîtier de capteur selon l'une des revendications 2 à 5, comprenant en outre :
une électronique de chargement et de protection pour le module de stockage d'énergie, qui est logée dans ce dernier.

7. Boîtier de capteur selon l'une des revendications précédentes, comprenant en outre :
un assemblage de montage (105) ;
l'assemblage de montage (105) étant réalisé pour la pose du boîtier de capteur sur une plaque de montage.

8. Boîtier de capteur selon la revendication 7, l'assemblage de montage (105) étant réalisé pour la pose du boîtier de capteur sur une tête sphérique (107).

9. Boîtier de capteur selon la revendication 1, comprenant en outre :
un récepteur GPS (113) pour la transmission d'informations, relatives à une hauteur actuelle du soleil à l'emplacement du boîtier de capteur, à l'unité d'asservissement automatique.

10. Boîtier de capteur selon l'une des revendications 1 et 9, comprenant en outre :
un capteur de luminosité (114) pour la détermination d'une direction, à partir de laquelle la lumière solaire frappe le module solaire, et pour la transmission d'informations, relatives à cette direction, à l'unité d'asservissement automatique.

11. Appareil de champ pour la mesure de niveau, d'état limite, de pression ou de débit, comprenant :
un boîtier de capteur selon l'une des revendications 1 à 10.

12. Système modulaire pour la fabrication d'appareils de champ différents destinés à la mesure de niveau, d'état limite, de pression ou de débit, le système modulaire comprenant :
un boîtier de capteur avec un module solaire selon l'une des revendications 1 à 10.

13. Système modulaire selon la revendication 12, comprenant en outre :
une électronique de détection ;
un module de commande ;
le module de stockage d'énergie pouvant être remplacé par l'électronique de détection ; et
le module solaire pouvant être remplacé par le module de commande.

14. Utilisation d'un boîtier de capteur selon l'une des revendications 1 à 10 dans un appareil de champ destiné à la mesure de niveau, d'état limite, de pression ou de débit.
